# EUROPEAN PATENT APPLICATION

(11) **EP 4 257 642 A1**
(43) Date of publication of application: **11.10.2023**
(21) Application number: 21900295.3
(22) Date of filing: 12.10.2021
(51) Int. Cl.: C09C 1/04, C09C 3/06, C09D 5/10, C09D 183/02, C09D 201/00, C09D 7/62, C23C 26/00

(54) **RUST PREVENTIVE COATING COMPOSITION, RUST PREVENTIVE FILM, AND ARTICLE, AND ZINC-BASED COMPOSITE PARTICLES AND COMPOSITION CONTAINING ZINC-BASED COMPOSITE PARTICLES**

(30) Priority: 02.12.2020 JP 2020200323
(71) Applicant: Nof Metal Coatings Asia Pacific Co., Ltd., Kanagawa 210-0865 (JP); TOYO ALUMINIUM KABUSHIKI KAISHA, Osaka 541-0056 (JP)
(72) Inventor: OHTANI Takahiko, Kawasaki-shi, Kanagawa 210-0865 (JP); TAMAKI Satoru, Kawasaki-shi, Kanagawa 210-0865 (JP); KURAMOTO Tomoko, Osaka-shi, Osaka 541-0056 (JP); NAKAO Takayuki, Osaka-shi, Osaka 541-0056 (JP); TAMAURA Hiroki, Osaka-shi, Osaka 541-0056 (JP)
(74) Representative: Cohausz & Florack
(86) International application number: PCT/JP2021/037790
(87) International publication number: WO 2022/118539

(57) **Abstract**

There is provided a rust preventive pigment capable of achieving both high stability in water or an aqueous medium, and excellent rust preventive capability and adhesion of an obtained rust preventive film, and a rust preventive coating composition with which a rust preventive film can be obtained that excels in stability of a rust preventive pigment and that excels in rust preventive capability and adhesion. The rust preventive coating composition of the present invention contains a rust preventive pigment comprising one or more among particles of zinc or a zinc alloy that has had at least a portion of the surface thereof treated with phosphoric acid.

## Description

### [Technical Field]

The present disclosure relates to a rust preventive coating composition, a rust preventive film, and an article. The present disclosure also relates to a zinc-based composite particle useful for aqueous paints and the like and to a composition containing the zinc-based composite particle.

### [Background Art]

Conventionally, rust preventive coating compositions that contain, as rust preventive pigments, zinc or zinc alloy particles, or zinc or zinc alloy particles the surface of which has been modified have been widely known and used to prevent corrosion of metals and alloys of iron and the like.

For example, Patent Document 1 discloses a zinc-rich paint, comprising as main components: a pigment slurry obtained by mixing a zinc flake with an alcohol and/or a ketone; and a silicic acid-based binder for binding the zinc flake (a rust preventive paint in which an inorganic or organic binder contains a high-concentration zinc powder).

Patent Document 2 discloses a coating zinc-containing metal flake that has a colloidal silica film on its surface and a paint that contains the coating zinc-containing metal flake that exhibit good rust prevention properties.

Patent Document 3 discloses: a modified metal particle for corrosion prevention coating, which is a zinc or zinc alloy-based metal particle containing an inorganic modification, specifically silicon dioxide, on its surface; and a rust preventive coating composition that contains the surface-modified metal particle.

Patent Document 4 and Patent Document 5 also disclose a rust preventive coating composition (a coating composition for corrosion protection), comprising: a particulate metal that contains a zinc or a zinc alloy; a binder that contains silane as a base material (a silane-based binder); and water.

Patent Document 6 discloses an anti-rust coated metal product, comprising: a coating film formed by applying a non-chromium aqueous metal rust preventive paint obtained by mixing, as a rust preventive pigment, a scaly metal zinc powder containing 6 to 35% by weight of a scaly metal aluminum powder in an aqueous binder solution containing an aqueous resin emulsion and a water-soluble silane coupling agent as binder components, to a surface of a metal product to be coated; and a coating formed by applying, on the coating film, a non-chromium surface treatment agent that contains alcohol as a solvent and contains, as a main component, a silane oligomer that has a weight average molecular weight of 1000 to 10000 and is obtained by hydrolyzing and condensation-polymerizing an alkoxysilane.

### [Citation List]

### [Patent Document]

Patent Document 1: JP-A-1996-73778
Patent Document 2: JP-A-1994-9897
Patent Document 3: JP-A-2018-70999
Patent Document 4: JP-A-2007-534794
Patent Document 5: JP-A-2008-280538
Patent Document 6: JP-A-2005-238001

### [Summary of Invention]

### [Technical Problem]

Although there is a demand for an aqueous coating composition in view of their low impact on the environment, it is extremely difficult to achieve both high stability of a rust preventive pigment in water or an aqueous medium and excellent rust prevention performance and adhesion of a resulting rust preventive film. For example, when a rust preventive pigment comprises a zinc or zinc alloy particle, or a zinc or zinc alloy particle having a thin silica (silicon dioxide) film on its surface, the stability of the rust preventive pigment in water or an aqueous medium is low. On the other hand, when a rust preventive pigment comprises a zinc or zinc alloy particle having a thick silica (silicon dioxide) film on its surface, the stability of the rust preventive pigment in water or an aqueous medium increases, but sufficient rust prevention performance cannot be obtained. Furthermore, when a rust preventive pigment comprises a zinc or zinc alloy particle, or a zinc or zinc alloy particle having a silica (silicon dioxide) film, the adhesion of a resulting rust preventive film tends to be low.

The present disclosure provides a rust preventive pigment that can achieve both the high stability thereof in water or in an aqueous medium and excellent rust prevention performance and adhesion of a resulting rust preventive film. In addition, the present disclosure also provides a rust preventive coating composition, in particular, an aqueous coating composition containing water as a solvent, that can provide excellent stability of a rust preventive pigment and a rust preventive film with excellent rust prevention performance and adhesion.

Furthermore, the present disclosure provides a zinc-based composite particle having high stability in water or in an aqueous medium, and a composition containing the zinc-based composite particle.

### [Solution to Problem]

The present disclosure relates to the following items.
[1] A rust preventive coating composition, including: a rust preventive pigment comprising a zinc or zinc alloy particle having a surface that is at least partially treated with a phosphoric acid.
[2] A rust preventive coating composition, including: a rust preventive pigment comprising a zinc or zinc alloy particle having a film on at least part of a surface thereof. The film contains at least one selected from an inorganic phosphoric acid and an inorganic phosphate.
[3] The rust preventive coating composition according to Item [1] or [2], in which the zinc or zinc alloy particle has a substantially spherical shape or a flake-like shape.
[4] The rust preventive coating composition according to any one of Items [1] to [3], in which the phosphoric acid is an orthophosphoric acid.
[5] The rust preventive coating composition according to any one of Items [1] to [4], further including water.
[6] The rust preventive coating composition according to any one of Items [1] to [5], further including a binder.
[7] The rust preventive coating composition according to Item [6], in which the binder contains at least one selected from a silane-based binder and an organic-based binder resin.
[8] The rust preventive coating composition according to any one of Items [1] to [7], further including: a hydrophilic organic solvent in addition to water.
[9] The rust preventive coating composition according to any one of Items [1] to [8], further including: an aluminum or aluminum alloy particle, as another metal pigment.
[10] A rust preventive film that is obtained by drying or heat-treating the rust preventive coating composition according to any one of Items [1] to [9].
[11] An article that has a rust preventive film on a surface thereof, in which the rust preventive film is obtained by drying or heat-treating the rust preventive coating composition according to any one of Items [1] to [9].
[12] A zinc-based composite particle, including: a flake-like zinc-containing particle; and a film that is on a surface of the flake-like zinc-containing particle and contains at least one selected from an inorganic phosphoric acid and an inorganic phosphate. The film contains 0.05 to 2.5 parts by mass of a phosphorus element per 100 parts by mass of the flake-like zinc-containing particle.
[13] The zinc-based composite particle according to Item [12], in which the inorganic phosphoric acid includes at least one selected from an orthophosphoric acid, a pyrophosphoric acid, a triphosphoric acid, a tetraphosphoric acid, and a phosphorous acid.
[14] A composition containing a zinc-based composite particle, including: the zinc-based composite particle according to Item [12] or [13]; and an amine compound.
[15] The composition containing a zinc-based composite particle according to Item [14], in which the amine compound is a primary amine.
[16] The composition containing a zinc-based composite particle according to Item [14] or [15], further including: a surfactant.
[17] The composition containing a zinc-based composite particle according to Item [16], in which the surfactant is a nonionic surfactant.

### [Advantageous Effects of Invention]

According to the present disclosure, it is possible to provide a rust preventive pigment that can achieve both the high stability thereof in water or in an aqueous medium and excellent rust prevention performance and adhesion of a resulting rust preventive film. In addition, according to the present disclosure, it is also possible to provide a rust preventive coating composition, in particular, an aqueous coating composition containing water as a solvent, that can provide excellent stability of a rust preventive pigment and a rust preventive film with excellent rust prevention performance and adhesion.

Furthermore, according to the present disclosure, it is possible to provide a zinc-based composite particle having high stability in water or in an aqueous medium, and a composition containing the zinc-based composite particle. The zinc-based composite particle can be particularly suitably used as a rust preventive pigment for an aqueous rust preventive coating composition.

### [Brief Description of Drawings]

FIG. 1 is a graph showing changes over time in the amount of gas generation that indicates the degradation of rust preventive pigments of Examples 1 to 2 and Comparative examples 1 to 3 (phosphoric acid treated zinc flake, untreated zinc flake, and silica treated zinc flake) in water.
FIG. 2 is a graph showing changes over time in the amount of gas generation that indicates the degradation of rust preventive pigments contained in coating compositions of Examples 1 to 2 and Comparative examples 1 to 3 (phosphoric acid treated zinc flake, untreated zinc flake, and silica treated zinc flake).
FIG. 3 shows photographs of iron plates on which coating films of the coating compositions of Examples 1 to 2 and Comparative examples 1 to 3 are formed, after 500 hours from the start of a salt spray test.
FIG. 4 shows photographs of the appearance of coating films having different thicknesses that are formed from the coating compositions of Example 2 and Comparative examples 1 and 3.
FIG. 5 shows photographs of iron plates on which coating films of coating compositions of Example 3 and Comparative example 4 are formed, after 24 hours and 72 hours from the start of a salt spray test.

### [Description of Embodiments]

Hereinafter, an embodiment for carrying out the present disclosure (hereinafter, simply referred to as "the present embodiment") will be described in detail. The present embodiment below is an illustrative example of the present disclosure, and it is not intended to limit the present disclosure to the following description. The present disclosure can be appropriately modified within the scope of the gist thereof.

As used herein, a term with "substantially" shall refer to the meaning of the term excluding "substantially" within the scope of common technical knowledge of those skilled in the art and shall also include the meaning of the term itself excluding "substantially".

### <Rust preventive pigment>

A rust preventive pigment of the present embodiment comprises one kind of a zinc or zinc alloy particle (zinc particle or zinc alloy particle) or a mixture of two or more kinds of zinc or zinc alloy particles, the surface of which is at least partially or preferably entirely treated with a phosphoric acid. Note that the rust preventive pigment as used herein means a rust preventive pigment used for a rust preventive coating composition of the present embodiment and is not limited to a zinc-based composite particle described later.

The zinc alloy may be of any type as long as it contains zinc. Examples thereof include, but not limited to, alloys that contain zinc and at least one selected from magnesium, aluminum, nickel, manganese, cobalt, tin, and chromium. The zinc content of the zinc alloy is not particularly limited, but generally it is preferably 50% by mass or more, and more preferably 55% by mass or more.

Among them, the zinc or zinc alloy particle used in the present embodiment is preferably a particle of zinc or a particle of an alloy containing zinc and aluminum (a Zn-Al based alloy).

The zinc or zinc alloy particle used in the present embodiment may have any shape, for example, a substantially spherical shape, a flake-like shape, a scale-like shape, a thin plate-like shape, a lamellar shape or the like. Generally, the zinc or zinc alloy particle preferably has a substantially spherical shape or a flake-like shape, and more preferably a flake-like shape. Two or more kinds of zinc or zinc alloy particles having different shapes may be used in combination.

In the case of a substantially spherical zinc or zinc alloy particle, the average particle diameter thereof may be any size, but generally it is preferably 15 µm or less, and more preferably 1 to 10 µm. The average particle diameter of the substantially spherical zinc or zinc alloy particle can be measured with a common laser diffraction particle size analyzer. Examples thereof include a laser scattering particle size distribution analyzer LA-960V2 manufactured by HORIBA, Ltd. and Microtrac (registered trademark) MT3000 II manufactured by MicrotracBEL Corp.

In the case of a flake-like zinc or zinc alloy particle, the average longer diameter thereof may be any size, but generally it is preferably 2 to 50 µm, and more preferably 3 to 30 µm. Generally, the average thickness thereof is preferably 5 µm or less, and more preferably 0.1 to 3 µm. Generally, the average aspect ratio (longer diameter/thickness) thereof is preferably within the range of 1.5 to 500, and more preferably within the range of 10 to 200. The average longer diameter and the average thickness of the flake-like zinc or zinc alloy particle can be measured with a common laser diffraction particle size analyzer. Examples thereof include a laser scattering particle size distribution analyzer LA-960V2 manufactured by HORIBA, Ltd. and Microtrac (registered trademark) MT3000 II manufactured by MicrotracBEL Corp.

The zinc or zinc alloy particle may or may not have a flat surface. For example, the surface may be uneven. The zinc or zinc alloy particle may have a surface in any condition. The zinc or zinc alloy particle may have been subjected to a physical surface treatment such as formation of unevenness or rolling or a chemical surface treatment such as oxidation. Such physical or chemical treatments can modify the physical properties of the particle, for example, to change the color tone such as blackening or to impart gloss.

The rust preventive pigment of the present embodiment comprises a zinc or zinc alloy particle, the surface of which is at least partially or preferably entirely treated with a phosphoric acid. Preferred examples thereof include, but not limited to, a rust preventive pigment comprising a zinc or zinc alloy particle having a layer modified with a phosphoric acid, that is, e.g., a film containing at least one selected from an inorganic phosphoric acid and an inorganic phosphate, at least partially or preferably entirely on its surface. Note that "treated with a phosphoric acid" as used herein means "treated with a phosphoric acid or a phosphate ion", and a compound used for such treatment is not limited to a phosphoric acid and may be a phosphoric acid compound that is hydrolyzed to produce a phosphate ion.

Such surface treatment can be carried out using an organic phosphoric acid compound or an inorganic phosphoric acid compound (such as a phosphate) that is hydrolyzed to produce a phosphate ion, but an inorganic phosphoric acid is preferably used. Examples of the inorganic phosphoric acid include, but not limited to, an orthophosphoric acid, a pyrophosphoric acid, a triphosphoric acid, a tetraphosphoric acid, a metaphosphoric acid and a phosphorous acid, any of which can be preferably used. More preferably, the inorganic phosphoric acid is an orthophosphoric acid. The inorganic phosphoric acid may be used singly or in combination of two or more.

The rust preventive pigment of the present embodiment, i.e., a zinc or zinc alloy particle, the surface of which is at least partially or preferably entirely treated with a phosphoric acid can be suitably produced by surface-treating the zinc or zinc alloy particle by uniformly kneading: for example, the zinc or zinc alloy particle; an inorganic phosphoric acid, preferably an orthophosphoric acid; a hydrophilic organic solvent; a small amount of water; an amine compound; and a surfactant. However, the method for producing the rust preventive pigment of the present embodiment is not limited to this method.

The surface treatment with a phosphoric acid of the present embodiment is preferably performed in the presence of a small amount of water. However, when water is only used as a solvent, it may not be possible to perform the surface treatment well and stably. Using an amine compound can reduce the generation of hydrogen by the chemical reaction between zinc and water, so that the zinc or zinc alloy particle can be surface-treated with a phosphoric acid more stably. Further, using a surfactant can prevent aggregation of the particles to improve the dispersibility, so that the zinc or zinc alloy particle can be surface-treated with a phosphoric acid better.

The hydrophilic organic solvent to be used preferably has a solubility parameter (SP) value of 8 to 12 (cal/cm³)^{1/2} determined by Fedors method. Further, the hydrogen bond term δh of the SP value determined by Hansen method is preferably 6 (cal/cm³)^{1/2} or more.

Examples of the hydrophilic organic solvent that can be used include, but not limited to, propylene glycol monomethyl ether, propylene glycol monoethyl ether, propylene glycol monobutyl ether; ethylene glycol monomethyl ether, ethylene glycol monoethyl ether (ethyl cellosolve), ethylene glycol monobutyl ether (butyl cellosolve); ethanol, propanol, isopropanol, butanol, isobutanol, tert-butanol, diacetone alcohol, amyl alcohol, isoamyl alcohol, polyoxyethylene glycol, and polyoxypropylene glycol. The hydrophilic organic solvent may be used singly or in combination of two or more.

The amine compound used is preferably a primary amine and is preferably an aliphatic amine. The amine compound used is more preferably an aliphatic primary amine. Examples of the amine compound that can be used include, but not limited to, ethylamine, propylamine, butylamine, hexylamine, octylamine, decylamine, dodecylamine (laurylamine), tridecylamine, tetradecylamine, hexadecylamine, octadecylamine (stearylamine), isopropylamine, isobutylamine, 2-ethylhexylamine, isotridecylamine, dimethylamine, diethylamine, dipropylamine, dibutylamine, dihexylamine, dioctylamine, dilaurylamine, ditridecylamine, distearylamine, diisopropylamine, diisobutylamine, di(2-ethylhexyl)amine, diisotridecylamine, methylbutylamine, ethylbutylamine, ethylhexylamine, ethyllaurylamine, ethylstearylamine, isopropyloctylamine, isobutyl 2-ethylhexylamine, trimethylamine, triethylamine, tripropylamine, tributylamine, trioctylamine, trilaurylamine, tritridecylamine, tristearylamine, triisopropylamine, triisobutylamine, tris(2-ethylhexyl)amine, triisotridecylamine, dimethyloctylamine, dimethyllaurylamine, dimethylstearylamine, diethyllaurylamine, allylamine, diallylamine, triallylamine, N,N-dimethylallylamine, cyclohexylamine, 2-methylcyclohexylamine, benzylamine, 4-methylbenzylamine, dicyclohexylamine, di-2-methylcyclohexylamine, dibenzylamine, di-4-methylbenzylamine, cyclohexyl-2-ethylhexylamine, cyclohexylbenzylamine, stearylbenzylamine, 2-ethylhexylbenzyl amine, dimethylbenzylamine, dimethylcyclohexylamine, tricyclohexylamine, tribenzylamine, tri-4-methylbenzylamine, morpholine, 3-methoxypropylamine, 3-ethoxypropylamine, 3-butoxypropylamine, 3-decyloxypropylamine, 3-lauryloxypropylamine, monoethanolamine, diethanolamine, monoisopropanolamine, monopropanolamine, butanolamine, triethanolamine, N,N-dimethylethanolamine, N-methylethanolamine, N-methyldiethanolamine, N-ethylethanolamine, N-propylethanolamine, N-isopropylethanolamine, N-butylethanolamine, N-cyclohexyl-N-methylaminoethanol, N-benzyl-N-propylaminoethanol, N-hydroxyethylpyrrolidine, N-hydroxyethylpiperazine, N-hydroxyethylmorpholine, ethylenediamine, 1,2-propanediamine, 1,3-propanediamine, N,N-dimethyl-1,3-propanediamine, N-cyclohexyl-1,3-propanediamine, N-decyl-1,3-propanediamine, N-isotridecyl-1,3-propanediamine, N,N-dimethylpiperazine, N-methoxyphenylpiperazine, N-methylpiperidine, N-ethylpiperidine, quinuclidine, diazabicyclo[2,2,2]octane, and 1,8-diazabicyclo[5,4,0]-7-undecene. The amine compound may be used singly or in combination of two or more.

The surfactant used is preferably a non-ionic surfactant (a nonionic surfactant) whose hydrophile lipophile balance (HLB) value is preferably 8 or more, and more preferably 8 to 13. Examples of the surfactant that can be used include, but not limited to, polyoxyethylene alkyl ether such as polyoxyethylene lauryl ether, polyoxyethylene alkylphenyl ether, polyoxyethylene alkyl phenol ether, polyoxyethylene alkylamide, polyoxyethylene higher alcohol ether, polyoxyalkylene alkyl ether, polyoxyethylene polyoxypropylene glycol, polyethylene glycol fatty acid ester, glycerin fatty acid ester, propylene glycol fatty acid ester, alkyl glyceryl ether, sorbitan fatty acid ester, and polyoxyethylene sorbitan fatty acid ester. The surfactant may be used singly or in combination of two or more.

The inorganic phosphoric acid (preferably orthophosphoric acid) may be added in any amount appropriately selected, but generally it is preferably added in an amount of 0.1 to 10 parts by mass, more preferably 0.5 to 10 parts by mass, and particularly preferably 0.5 to 5 parts by mass, per 100 parts by mass of the zinc or zinc alloy particle. The phosphorus element content of the film containing at least one selected from an inorganic phosphoric acid and an inorganic phosphate that is formed on the surface of a zinc or zinc alloy particle is not particularly limited, but generally, it is preferably 0.05 to 2.5 parts by mass, and more preferably 0.2 to 1.5 parts by mass, per 100 parts by mass of the zinc or zinc alloy particle.

The hydrophilic organic solvent may be added in any amount appropriately selected, but generally it is preferably added in an amount of 5 to 100 parts by mass, and more preferably 10 to 60 parts by mass, per 100 parts by mass of the zinc or zinc alloy particle.

Water may be added in any amount appropriately selected, but generally it is preferably added in an amount of 0.05 to 10 parts by mass, and more preferably 0.1 to 5 parts by mass, per 100 parts by mass of the zinc or zinc alloy particle.

The amine compound may be added in any amount appropriately selected, but generally it is preferably added in an amount of 0.1 to 10 parts by mass, and more preferably 0.5 to 5 parts by mass, per 100 parts by mass of the zinc or zinc alloy particle.

The surfactant may be added in any amount appropriately selected, but generally it is preferably added in an amount of 0.1 to 20 parts by mass, and more preferably 0.3 to 10 parts by mass, per 100 parts by mass of the zinc or zinc alloy particle.

When kneading, the kneaded mixture may further contain a solvent other than the hydrophilic organic solvent and water (a non-hydrophilic organic solvent), but generally, the smaller the amount is, the more preferable it is. Specifically, the amount of the non-hydrophilic organic solvent is preferably 50 parts by mass or less per 100 parts by mass of the zinc or zinc alloy particle. Note that it is possible to use commercially available zinc or zinc alloy particles (composition) dispersed in a dispersion medium such as an aliphatic or aromatic hydrocarbon oil as they are or after removing the solvent of the dispersion medium if necessary, to produce the rust preventive pigment of the present embodiment.

Incidentally, the kneading can be performed using a known device such as a mixer or a kneader.

The time period and temperature for the kneading may be appropriately selected. The surface treatment (kneading) with a phosphoric acid according to the present embodiment does not need to be performed at a high temperature and can be performed at a relatively low temperature such as a temperature of about 10 to 40°C or room temperature.

A flake-like zinc or zinc alloy particle (a zinc flake or a zinc alloy flake) is industrially produced by flattening a substantially spherical zinc or zinc alloy particle using a fatty acid such as stearic acid as a lubricant. It is difficult to completely remove the fatty acid used as a lubricant after forming a zinc or zinc alloy particle into a flake-like shape, and there have been cases in which formation of a film is inhibited in conventional surface treatments such as forming a silica film. On the other hand, the fatty acid is efficiently removed from the surface of the zinc or zinc alloy particle in the surface treatment with the phosphoric acid according to the present embodiment, so that such problem does not occur.

As described above, the rust preventive pigment of the present embodiment, i.e., the zinc or zinc alloy particle, the surface of which is at least partially or preferably entirely treated with the phosphoric acid is obtained in the form of a paste or composition that contains the rust preventive pigment of the present embodiment, a hydrophilic organic solvent, water, etc. The rust preventive pigment of the present embodiment may be separated from the paste or composition by filtration or the like, but the paste or composition that contains the rust preventive pigment of the present embodiment can be used for producing a rust preventive coating composition as it is or after removing the solvent or further adding another solvent if necessary.

### <Rust preventive coating composition>

A rust preventive coating composition of the present embodiment contains the above-described rust preventive pigment of the present embodiment.

The rust preventive coating composition of the present embodiment may include a solvent comprising only one or more organic solvents, but the rust preventive coating composition of the present embodiment is preferably an aqueous coating composition whose solvent is water or a mixture of water and one or more organic solvents (an aqueous solvent). That is, the rust preventive coating composition of the present embodiment preferably contains water as a solvent, and may further contain an organic solvent, preferably a hydrophilic organic solvent, in addition to water.

In the case that the solvent is a mixture of water and an organic solvent (an aqueous solvent), the organic solvent to be used is preferably a hydrophilic organic solvent. The organic solvent contained in the rust preventive coating composition of the present embodiment may be a hydrophilic organic solvent that is used when producing the rust preventive pigment of the present embodiment and contained in the resulting paste or composition. The organic solvent contained in the rust preventive coating composition of the present embodiment also preferably has an SP value of 8 to 12 (cal/cm³)^{1/2} determined by Fedors method. Further, the hydrogen bond term δh of the SP value determined by Hansen method is preferably 6 (cal/cm³)^{1/2} or more.

Examples of the organic solvent that can be used in the rust preventive coating composition of the present embodiment include, but not limited to, glycols such as ethylene glycol, diethylene glycol, triethylene glycol, tetraethylene glycol, propylene glycol, dipropylene glycol and tripropylene glycol; glycol ethers such as monomethyl ether, monoethyl ether, dimethyl ether and diethyl ether of the glycols; alcohols such as ethanol, propanol, isopropanol, butanol, isobutanol, tert-butanol and diacetone alcohol; and ketones such as acetone and methyl ethyl ketone. Among them, the organic solvent to be used is preferably glycols or glycol ethers. The organic solvent may be used singly or in combination of two or more.

The water or aqueous solvent content of the rust prevention coating composition of the present embodiment is not particularly limited, but generally it is preferably 30% by mass or more, and more preferably 50 to 85% by mass. In the case of an aqueous solvent, it is preferred that the water content of the aqueous solvent is 50% by mass or more, and the organic solvent content of the aqueous solvent is 50% by mass or less.

Generally, the rust preventive coating composition of the present embodiment further contains a binder.

The binder may be any type, and any inorganic-based binder or organic-based binder resin can be used. The binder may be used singly or in combination of two or more.

Examples of the inorganic-based binder include, but are not limited to, a silane compound such as a silane-based coupling agent; silicates such as sodium silicate, potassium silicate and lithium silicate; metal alkoxide such as tetraethoxysilane, tetraethoxytitanium, tetraisopropoxytitanium, tetrapropoxyzirconium, triisopropoxyaluminum and dimethoxyzinc; and silicone resin. Examples of the silane-based coupling agent include, but are not limited to, vinylsilane-based coupling agents such as vinyltrimethoxysilane; acrylic silane-based coupling agents such as methacryloxypropyltrimethoxysilane; aminosilane-based coupling agents such as 3-amino-propyltrimethoxysilane; epoxy silane-based coupling agents such as β-(3,4-epoxycyclohexyl)ethyltrimethoxysilane and γ-glycidoxypropyltrimethoxysilane. Other examples of the inorganic-based binder that can be used are titanium-based coupling agents such as isopropyltriisostearoyl titanate; aluminum-based coupling agents such as acetoalkoxyaluminum diisopropylate; and zirconium-based coupling agents such as zirconium tributoxymonoacetylacetonate.

Among them, the inorganic-based binder is preferably a silane-based binder such as a silane-based coupling agent.

Examples of the organic-based binder resin include, but are not limited to, acrylic resins, epoxy resins, phenolic resins, polystyrene resins, polyurethane resins, oxazoline group-containing polymers, and polyvinylpyrrolidone.

The binder content of the rust preventive coating composition of the present embodiment is not particularly limited and may be appropriately selected depending on the type of the binder or the like. When the silane-based binder is used, the silane-based binder content of the rust preventive coating composition of the present embodiment is not particularly limited, but generally it is preferably 3 to 20% by mass, and more preferably 4 to 16% by mass.

The rust preventive coating composition of the present embodiment contains the rust preventive pigment of the present embodiment, i.e., one or two or more kinds of zinc or zinc alloy particles, the surface of which is at least partially or preferably entirely treated with the phosphoric acid. In addition, the rust preventive coating composition of the present embodiment may further contain another metal pigment.

Another metal pigment other than the rust preventive pigment of the present embodiment (hereinafter, also referred to as "the other metal pigment") may be any metal pigment. Examples thereof includes, but are not limited to, a metal or metal alloy particle such as an aluminum or aluminum alloy particle, a manganese or manganese alloy particle, a nickel or nickel alloy particle, a titanium or titanium alloy particle, a tin or tin alloy particle, an iron or iron alloy particle, a magnesium or magnesium alloy particle, a cobalt or cobalt alloy particle, a tungsten or tungsten alloy particle, a vanadium or vanadium alloy particle, a molybdenum or molybdenum alloy particle, a tantalum or tantalum alloy particle, a niobium or niobium alloy particle, and a stainless steel particle. The other metal pigment may be used singly or in combination of two or more.

The metal or metal alloy particle, which is the other metal pigment, may have any shape, but generally they preferably have a substantially spherical shape or a flake-like shape, and more preferably a flake-like shape. Further, the other metal pigment may be at least partially surface-treated with, for example, silica or an aliphatic carboxylic acid.

In an exemplary aspect, it is preferred that the rust preventive coating composition of the present embodiment further contains an aluminum or aluminum alloy particle in addition to the rust preventive pigment of the present embodiment.

The rust preventive pigment content of the rust preventive coating composition of the present embodiment (the amount of the rust preventive pigment of the present embodiment and the other metal pigment) is not particularly limited, but generally it is preferably 10 to 50% by mass. When the aluminum or aluminum alloy particle is used as the other metal pigment in combination with the rust preventive pigment of the present embodiment, the ratio of the rust preventive pigment of the present embodiment to the aluminum or aluminum alloy particle in the rust preventive coating composition (the rust preventive pigment of the present embodiment: the aluminum or aluminum alloy particle) is preferably 9:1 to 5:5 in terms of mass ratio.

The rust preventive coating composition of the present embodiment may further contain a metal oxide pigment or an organic pigment.

Examples of the metal oxide pigment include, but are not limited to, a manganese oxide particle, a molybdenum oxide particle, a tungsten oxide particle, a tin oxide particle, an antimony oxide particle, an iron oxide particle, an aluminum oxide particle, a zinc oxide particle, a magnesium oxide particle, a niobium oxide particle, a vanadium oxide particle, a tantalum oxide particle, a silica particle, a titania particle, a zirconia particle, a silica alumina particle, a silica titania particle, and a silica magnesia particle.

The organic pigment may be of any type. Examples thereof include, but are not limited to, β-naphthol pigments, β-oxynaphthoic pigments, pyrazolone-based pigments, acetoacetic acid allylide-based monoazo pigments, acetoacetic acid allylide-based disazo pigments, benzimidazolone-based monoazo pigments, isoindolinone-based pigments, styrene-based pigments, isoindoline-based pigments, and phthalocyanine-based pigments.

The rust preventive coating composition of the present embodiment may contain, as appropriate, additives such as a surfactant, a thickener, a repairing agent (inhibitor), a lubricant, a dispersant, a wetting agent, a leveling agent, a rheology control agent, a pH regulator, a pH stabilizer, a film forming agent, a stabilizer, a thixotropic agent, an anti-foaming agent, an ultraviolet absorber, a flame retardant, an antiseptic agent, an antistatic agent, and a colorant. The rust preventive coating composition of the present embodiment may contain an amine compound that is used when producing the rust preventive pigment of the present embodiment and contained in the resulting paste or composition. The rust preventive pigment of the present embodiment is also excellent in dispersibility, and it is usually not necessary to add a dispersant. However, there are cases in which it is preferable to use a dispersant to stably disperse the other metal pigment or the additives.

There are cases in which adding a surfactant to the rust preventive coating composition of the present embodiment can improve the adhesion or the leveling of the resulting rust preventive film.

The surfactant may be of any type. Examples thereof include, but are not limited to, non-ionic surfactants such as polyoxyethylene alkyl ether, polyoxyethylene alkylphenyl ether, polyoxyethylene alkyl phenol ether, polyoxyethylene alkylamide, polyoxyethylene higher alcohol ether, polyoxyalkylene alkyl ether, polyoxyethylene polyoxypropylene glycol, polyethylene glycol fatty acid ester, glycerin fatty acid ester, propylene glycol fatty acid ester, alkyl glyceryl ether, sorbitan fatty acid ester, and polyoxyethylene sorbitan fatty acid ester; cationic-based surfactants such as mono-, di- or trialkylamine salts, alkyltrimethylammonium halide, dialkyldimetylammonium halide and alkyldimethylbenzylammonium chloride; and anionic-based surfactants such as mono- or dialkyl phosphates, polyoxyethylene alkyl ether phosphates, polyoxyethylene alkyl phenyl ether phosphates and dialkyl sulfosuccinates. Among them, the surfactant used is preferably a non-ionic surfactant. The surfactant may be used singly or in combination of two or more. The surfactant contained in the rust preventive coating composition of the present embodiment may be a surfactant that is used when producing the rust preventive pigment of the present embodiment and contained in the resulting paste or composition.

The surfactant content of the rust preventive coating composition of the present embodiment is not particularly limited, but generally it is preferably 0.01 to 10% by mass.

A thickener may also be added to the rust preventive coating composition of the present embodiment for the purpose of adjusting the viscosity.

The thickener may be of any type. Examples thereof include, but are not limited to, a cellulosic thickener such as an ether (a cellulose ether) of methylcellulose, hydroxymethyl cellulose, hydroxypropylmethylcellulose, hydroxyethylcellulose, ethylhydroxyethyl cellulose, methylethyl cellulose and hydroxypropyl cellulose; a cellulose nanofiber; a xanthan gum; a urethane-based thickener; an acrylic thickener; a modified clay; a fatty acid salt; and a fatty acid amido. Among them, the thickener used is preferably a cellulose ether. The thickener may be used singly or in combination of two or more.

The thickener content of the rust preventive coating composition of the present embodiment is not particularly limited, but generally it is preferably 0.005 to 2% by mass.

A repairing agent (inhibitor) that can be added to the rust preventive coating composition of the present embodiment is a compound capable of reacting with an exposed metal or alloy surface of the rust preventive pigment of the present embodiment or of the other metal pigment to form a film or to modify (repair) the exposed surface when the rust preventive pigment or the other metal pigment is damaged in the composition to expose the metal or alloy surface.

The repairing agent may be of any type. Examples thereof include, but are not limited to, a boron compound such as a boric acid; an aluminum compound such as aluminum hydroxide; a gallium compound such as gallium hydroxide; a silicon compound such as sodium silicate; an indium compound such as indium hydroxide; a tin compound such as tin hydroxide; a bismuth compound such as bismuth hydroxide; a vanadic acid compound such as lithium vanadate; a tungstic acid compound such as lithium tungstate; a molybdic acid compound such as potassium molybdate; a cerium compound such as cerium nitrate; a phosphate such as potassium phosphate; an amine-based compound such as polyethylenimine; and a silicon compound such as tetraethoxysilane and a silane coupling agent. Among them, the repairing agent used is preferably a phosphate compound or a bismuth compound. The repairing agent may be used singly or in combination of two or more. The repairing agent may be added in any form by any method. For example, the repairing agent may be added by adding a rust preventive pigment containing any of the compounds above, by adding zeolite, cellulose nanofiber or the like in which any of the compounds above is impregnated or carried, or by adding a substance in which any of the compounds above is encapsulated.

Incidentally, an excessive amount of the phosphoric acid or phosphoric acid compound that is used when producing the rust preventive pigment of the present embodiment and contained in the resulting paste or composition also functions as a repairing agent in the rust preventive coating composition.

The repairing agent content of the rust preventive coating composition of the present embodiment is not particularly limited and can be appropriately selected. Generally, it is preferably 10% by mass or less.

A lubricant may also be added to the rust preventive coating composition of the present embodiment for the purpose of adjusting the coefficient of friction of the surface of the rust preventive film obtained from the rust preventive coating composition of the present embodiment.

The lubricant may be of any type. Examples thereof include, but are not limited to, a wax such as polyolefin or modified polyolefin (polyethylene, modified polyethylene, polypropylene, modified polypropylene, etc.) or paraffin; a carnauba wax; fluorine resin; melamine cyanurate; or hexagonal boron nitride. The lubricant may be used singly or in combination of two or more.

The lubricant content of the rust preventive coating composition of the present embodiment is not particularly limited and can be appropriately selected so as to obtain a desired surface frictional coefficient. Generally, it is preferably 20% by mass or less.

The rust preventive coating composition of the present embodiment can be produced, by a known method commonly used, by uniformly stirring and mixing the rust preventive pigment of the present embodiment or a paste or composition containing the rust preventive pigment of the present embodiment with paint components such as water and/or the organic solvent, the binder, etc. Incidentally, the paste or composition containing the rust preventive pigment of the present embodiment as used herein may be a paste or composition that is obtained in the production of the rust preventive pigment of the present embodiment by uniformly kneading a zinc or zinc alloy particle, an inorganic phosphoric acid, a hydrophilic organic solvent, a small amount of water, etc.

### <Rust preventive film and an article with a rust preventive film>

A rust preventive film of the present embodiment is obtained by drying or heat-treating the rust preventive coating composition of the present embodiment described above. An article with a rust preventive film of the present embodiment has, on a surface thereof, a rust preventive film obtained by drying or heat-treating the rust preventive coating composition of the present embodiment described above; and is obtained by, for example, applying the rust preventive coating composition of the present embodiment to an article to be coated and drying or heat-treating the applied rust preventive coating composition.

The rust preventive coating composition of the present embodiment can be applied to any metal material or alloy material. Examples of the metal material and the alloy material include, but are not limited to, an aluminum, an aluminum alloy, an iron, an iron alloy, a carbon steel, an alloy steel, and a stainless steel. The rust preventive coating composition of the present embodiment can also be applied to a metal material or an alloy material whose surface has been subjected to plating; chemical conversion treatment such as oxidation, nitridation and carbonization; and dry plating. Among them, the rust preventive coating composition of the present embodiment can be suitably applied to an article to be coated that contains an iron or an iron alloy, or an article to be coated that has, on its surface, a film or layer containing an iron or an iron alloy, and an excellent effect of improving the corrosion resistance can be obtained. Incidentally, a coating target or an article to be coated may be a raw material (a metal material or an alloy material itself), an intermediate product, a final product or the like without particular limitation.

The rust preventive coating composition of the present embodiment may be applied to an article to be coated by any known method. However, preferred are a dipping method (an immersion method), a dip spin method (an immersion method involving centrifugal shaking), a spray coating method, a spin coating method, and the like. The rust preventive coating composition of the present embodiment can also be applied using a roller, a doctor blade, a bar coater, a brush, or the like. Further, the application conditions may be appropriately selected without particular limitation.

The rust preventive film of the present embodiment is formed by applying the rust preventive coating composition of the present embodiment to an article to be coated and then drying or heat-treating it. The applied rust preventive coating composition may first be dried at a relatively low temperature and then further heat-treated at a high temperature.

Although the method and conditions for the drying and heat-treating may be appropriately selected, it is generally preferred to heat the rust preventive coating composition applied to an article to be coated at a temperature of 60 to 400°C to remove the solvent and form the rust preventive film. This heating may be performed in any known method such as a convection heating method, an infrared heating method, or an induction heating method. The conditions of the heat treatment such as the time period and atmosphere of the heat treatment may also be appropriately selected without particular limitation. For example, the heat treatment may be performed in the atmosphere or may be performed in an inert gas such as nitrogen gas.

An article to be coated may be subjected to a treatment such as degreasing, water washing or the like as appropriate before the rust preventive coating composition of the present embodiment is applied to the article to be coated. Such degreasing and water washing treatments can be performed by any known methods. The degreasing and water washing treatments may be appropriately selected and may be solvent degreasing using a hydrocarbon-based degreasing agent or the like, water washing treatment using an alkaline aqueous degreasing agent or the like, or washing treatment using supercritical water or the like, for example.

The application amount of the rust preventive coating composition of the present embodiment is not particularly limited, but generally it is applied in such an amount that the average thickness of the rust preventive film after drying is preferably 1 to 50 µm, more preferably 5 to 30 µm. In terms of the amount of zinc after drying, the rust preventive coating composition of the present embodiment is applied in such an amount that the zinc content of the rust preventive film after drying is preferably 3 to 200 g/m², and more preferably 20 to 120 g/m².

### <Zinc-based composite particle and a composition containing the zinc-based composite particle >

A zinc-based composite particle of the present embodiment includes: a zinc-containing particle in a flake-like shape; and a film that is on the zinc-containing particle and contains at least one selected from an inorganic phosphoric acid and an inorganic phosphate. The film contains 0.05 to 2.5 parts by mass of a phosphorus element per 100 parts by mass of the flake-like zinc-containing particle. A composition containing the zinc-based composite particle of the present embodiment includes the zinc-based composite particle of the present embodiment and an amine compound.

Although it is preferred that the film containing at least one selected from an inorganic phosphoric acid and an inorganic phosphate is formed all over a surface (over the entire surface) of the flake-like zinc-containing particle, the film may be partially formed on part of the surface of the flake-like zinc-containing particle as long as the advantageous effects of the present embodiment are not interfered.

The film containing at least one selected from an inorganic phosphoric acid and an inorganic phosphate that is formed on the surface of the flake-like zinc-containing particle contains an inorganic phosphoric acid adsorbed on the surface of the flake-like zinc-containing particle and/or an inorganic phosphate such as a zinc phosphate compound produced by the reaction of zinc (Zn) contained in the flake-like zinc-containing particle with the inorganic phosphoric acid.

As the inorganic phosphoric acid, at least one selected from an orthophosphoric acid, a pyrophosphoric acid, a triphosphoric acid, a tetraphosphoric acid, and a phosphorous acid can be used, for example. Among them, an orthophosphoric acid is preferably used. One example of the inorganic phosphate is, but not limited to, a zinc phosphate compound produced by the reaction of zinc (Zn) contained in the flake-like zinc-containing particle with the inorganic phosphoric acid.

In the zinc-based composite particle of the present embodiment, the phosphorus element content of the film containing at least one selected from an inorganic phosphoric acid and an inorganic phosphate that is formed on the surface of the flake-like zinc-containing particle is preferably 0.05 to 2.5 parts by mass, and particularly preferably 0.2 to 1.5 parts by mass, per 100 parts by mass of the flake-like zinc-containing particle. When the phosphorus element content of the film is less than 0.05 parts by mass per 100 parts by mass of the zinc-containing particle, it may not be possible to obtain sufficiently high stability of the zinc-based composite particle in water or an aqueous medium. When the phosphorus element content of the film exceeds 2.5 parts by mass per 100 parts by mass of the zinc-containing particle, aggregates of the zinc-based composite particles may occur, and the color tone tends to deteriorate.

The film may have any thickness as long as the phosphorus element content of the film is within the ranges above.

The flake-like zinc-containing particle primarily comprises a zinc or a zinc alloy. The zinc alloy may be of any type as long as it includes zinc generally in an amount of 50% by mass or more. Examples of the zinc alloy includes, but are not limited to, zinc alloys made of zinc and at least one selected from aluminum, manganese, magnesium, chromium and the like.

The flake-like zinc-containing particle may have any average longer diameter, but generally it is preferably 2 to 50 µm, and more preferably 3 to 30 µm. The flake-like zinc-containing particle may have any average thickness, but generally it is preferably 5 µm or less, and more preferably 0.1 to 3 µm. The average aspect ratio (longer diameter/thickness) thereof may be any ratio, but generally it is preferably within the range of 1.5 to 500, and more preferably within the range of 10 to 200.

The zinc-based composite particle of the present embodiment can be produced in the form of a composition containing the zinc-based composite particle and a solvent, preferably in the form of the composition containing the zinc-based composite particle of the present embodiment that contains the zinc-based composite particle of the present embodiment and an amine compound.

The zinc-based composite particle of the present embodiment can be suitably produced by, for example, a method including a process of mixing and kneading a flake-like zinc-containing particle and a solution in which an inorganic phosphoric acid is dissolved in an organic solvent. By this process, a film containing at least one selected from an inorganic phosphoric acid and an inorganic phosphate can be formed on the surface of the flake-like zinc-containing particle.

The organic solvent to be used may be of any type but is preferably a hydrophilic organic solvent from the viewpoint that the inorganic phosphoric acid is easily dissolved. Examples of the hydrophilic organic solvent include, but are not limited to ethanol, n-propanol, isopropanol, n-butanol, isobutanol, diacetone alcohol, amyl alcohol, isoamyl alcohol, ethyl cellosolve, butyl cellosolve, polyoxyethylene glycol, and polyoxypropylene glycol. The hydrophilic organic solvent may be used singly or in combination of two or more.

Generally, the hydrophilic organic solvent is preferably added in an amount of 5 to 100 parts by mass, and more preferably 20 to 40 parts by mass, per 100 parts by mass of the flake-like zinc-containing particle.

Flake-like zinc-containing particles are commercially available, and some commercial products contain aliphatic or aromatic hydrocarbon oil such as a mineral spirit or solvent naphtha as a dispersion medium. Such commercial products can be used as it is for the production of the zinc-based composite particle of the present embodiment and the composition containing the zinc-based composite particle of the present embodiment. In general, however, the smaller the hydrocarbon oil content (the amount of the hydrocarbon oil used) is, the more preferable it is. Specifically, the hydrocarbon oil content is preferably 70 parts by mass or less, and more preferably 50 parts by mass or less, per 100 parts by mass of the flake-like zinc-containing particle. Incidentally, commercially available flake-like zinc-containing particles containing aliphatic or aromatic hydrocarbon oil or the like as a dispersion medium can be used for the production of the zinc-based composite particle of the present embodiment and the composition containing the zinc-based composite particle of the present embodiment after removing the solvent of the dispersion medium if necessary.

In the process of mixing and kneading the flake-like zinc-containing particle with the solution in which an inorganic phosphoric acid is dissolved in the organic solvent, the solution in which the inorganic phosphoric acid is dissolved in the organic solvent may further contain a small amount of water. Generally, water is preferably added in an amount of 10 parts by mass or less, and more preferably 5 parts by mass or less, per 100 parts by mass of the flake-like zinc-containing particle.

In the present embodiment, it is preferred to mix and knead the flake-like zinc-containing particle and the solution in which the inorganic phosphoric acid is dissolved in the organic solvent in the presence of a surfactant and/or an amine compound. The surfactant is absorbed or intervenes on the surface of the film containing at least one selected from an inorganic phosphoric acid and an inorganic phosphate to serve to prevent aggregation of the produced zinc-based composite particles. In addition, the amine compound performs a function of reducing the generation of hydrogen.

The surfactant used may be of any type, but non-ionic surfactants (nonionic-based surfactants) such as polyoxyethylene alkyl phenol ether, polyoxyethylene alkyl ether, polyethylene glycol fatty acid ester, sorbitan fatty acid ester, and polyoxyethylene sorbitan fatty acid ester can be suitably used. The surfactant may be used singly or in combination of two or more.

The surfactant may be added in any amount, but generally it is preferably added in an amount of 0.3 to 5 parts by mass, and more preferably 1 to 4 parts by mass, per 100 parts by mass of the flake-like zinc-containing particle.

The amine compound used may be of any type. Examples thereof include, but are not limited to, ethylamine, propylamine, butylamine, hexylamine, octylamine, laurylamine, tridecylamine, stearylamine, isopropylamine, isobutylamine, 2-ethylhexylamine, isotridecylamine, dimethylamine, diethylamine, dipropylamine, dibutylamine, dihexylamine, dioctylamine, dilaurylamine, ditridecylamine, distearylamine, diisopropylamine, diisobutylamine, di(2-ethylhexyl)amine, diisotridecylamine, methylbutylamine, ethylbutylamine, ethylhexylamine, ethyllaurylamine, ethylstearylamine, isopropyloctylamine, isobutyl 2-ethylhexylamine, trimethylamine, triethylamine, tripropylamine, tributylamine, trioctylamine, trilaurylamine, tritridecylamine, tristearylamine, triisopropylamine, triisobutylamine, tris(2-ethylhexyl)amine, triisotridecylamine, dimethyloctylamine, dimethyllaurylamine, dimethylstearylamine, diethyllaurylamine, allylamine, diallylamine, triallylamine, N,N-dimethylallylamine, cyclohexylamine, 2-methylcyclohexylamine, benzylamine, 4-methylbenzylamine, dicyclohexylamine, di-2-methylcyclohexylamine, dibenzylamine, di-4-methylbenzyl amine, cyclohexyl-2-ethylhexylamine, cyclohexylbenzylamine, stearylbenzylamine, 2-ethylhexylbenzylamine, dimethylbenzylamine, dimethylcyclohexylamine, tricyclohexylamine, tribenzylamine, tri-4-methylbenzylamine, morpholine, 3-methoxypropylamine, 3-ethoxypropylamine, 3-butoxypropylamine, 3-decyloxypropylamine, 3-lauryloxypropylamine, monoethanolamine, diethanolamine, monoisopropanolamine, monopropanolamine, butanolamine, triethanolamine, N,N-dimethylethanolamine, N-methylethanolamine, N-methyldiethanolamine, N-ethylethanolamine, N-propylethanolamine, N-isopropylethanolamine, N-butylethanolamine, N-cyclohexyl-N-methylaminoethanol, N-benzyl-N-propylaminoethanol, N-hydroxyethylpyrrolidine, N-hydroxyethylpiperazine, N-hydroxyethylmorpholine, ethylenediamine, 1,2-propanediamine, 1,3-propanediamine, N,N-dimethyl-1,3-propanediamine, N-cyclohexyl-1,3-propanediamine, N-decyl-1,3-propanediamine, N-isotridecyl-1,3-propanediamine, N,N-dimethylpiperazine, N-methoxyphenylpiperazine, N-methylpiperidine, N-ethylpiperidine, quinuclidine, and diazabicyclo[2,2,2]octane, 1,8-diazabicyclo[5,4,0]-7-undecene. The amine compound may be used singly or in combination of two or more.

Among them, the amine compound used is preferably a primary amine such as ethylamine, propylamine, or laurylamine. Using a primary amine can further reduce the generation amount of hydrogen.

The mixing and kneading of the flake-like zinc-containing particle with the solution in which the inorganic phosphoric acid is dissolved in the organic solvent can be carried out using a known device such as a mixer or a kneader.

The mixing and kneading of the flake-like zinc-containing particle with the solution in which the inorganic phosphoric acid is dissolved in the organic solvent can be carried out, for example, at a relatively low temperature of about 10 to 40°C under normal pressure or under normal temperature and normal pressure, but it is not limited thereto. The mixing and kneading time period of the flake-like zinc-containing particle with the solution in which the inorganic phosphoric acid is dissolved in the organic solvent may be appropriately selected as long as it is sufficient time for forming the film containing at least one selected from an inorganic phosphoric acid and an inorganic phosphate on the surface of the flake-like zinc-containing particle.

As described above, the zinc-based composite the particle of the present embodiment are obtained in the form of a composition containing the zinc-based composite particle and an organic solvent, etc., and preferably in the form of the composition containing the zinc-based composite particle of the present embodiment, which further contains an amine compound. The zinc-based composite particle of the present embodiment may be separated in the form of a dry powder or the like by removing the organic solvent from the obtained composition, or the obtained composition can be used for various applications as it is or by adding a component(s) thereto if necessary.

The zinc-based composite particle of the present embodiment can be suitably used as a rust preventive pigment for a rust preventive coating composition, particularly for an aqueous rust preventive coating composition. The composition containing the zinc-based composite particle of the present embodiment, with additives added as needed, can also be suitably used for the rust preventive coating composition, particularly for the aqueous rust preventive coating composition. The zinc-based composite particle of the present embodiment and the composition containing the zinc-based composite particle of the present embodiment can also be suitably used for the rust preventive coating composition of the present embodiment.

### [Examples]

Hereinafter, the present disclosure will be described in more detail by way of Examples, but it is not limited thereto.

### <Example S-1>

### (Production of a composition containing a zinc-based composite particle)

After washing 1000 g of a commercially available zinc flake ("Zinc flake MA-ZA-F" manufactured by MITSUI MINING & SMELTING CO.,LTD.; solid content: 100%) with propylene glycol monomethyl ether, the zinc flake was charged in a mixer and kneaded to obtain a cake having a solid content of 88%. Next, 10 g of laurylamine and 42 g of a non-ionic (nonionic-based) surfactant ("EMULGEN 105" and "EMULGEN LS-106" manufactured by Kao Corporation) were charged. Then, a solution in which 7.5 g of an orthophosphoric acid was dissolved in propylene glycol monomethyl ether was charged therein. The mixture was kneaded at 30°C for 30 minutes to obtain 1394 g of a composition containing a zinc-based composite particle (solid content: 1060 g). The phosphorus element content of this composition was 0.24 parts by mass per 100 parts by mass of the zinc flake (calculated from the amount of the orthophosphoric acid added).

### (Measurement of the amount of a free phosphoric acid)

The amount of free phosphoric acid in the obtained composition containing the zinc-based composite particle was measured using an ICP emission spectrometer ("Thermo Fischer ICP-OES iCAP6000" manufactured by Thermo Fisher Scientific K.K.). As a result, the amount of the free phosphoric acid was less than 0.01% by mass with respect to the mass of the zinc flake in terms of a phosphorus element.

### (Evaluation of the stability of the zinc-based composite particle in an aqueous medium)

After 22.5 g of the obtained composition containing the zinc-based composite particle was dispersed in 90 g of butyl cellosolve, 90 g of deionized water was added thereto and stirred. A 10% by mass dimethylethanolamine aqueous solution was further added thereto to adjust the pH to 10.5. Thus, a sample was prepared. The prepared sample was allowed to stand at 40°C for 7 days, and generated gas was collected to measure its volume. As a result, the amount of gas generation was 0 mL.

### <Example S-2>

In the same manner as in Example S-1, except that the orthophosphoric acid wad added in an amount of 10.0 g, 1397 g of a composition containing a zinc-based composite particle (solid content: 1062 g) was obtained. The phosphorus element content of this composition was 0.32 parts by mass per 100 parts by mass of the zinc flake (calculated from the amount of the orthophosphoric acid added).

### (Measurement of the amount of free phosphoric acid)

The amount of free phosphoric acid in the obtained composition containing the zinc-based composite particle was measured using an ICP emission spectrometer ("Thermo Fischer ICP-OES iCAP6000" manufactured by Thermo Fisher Scientific K.K.). As a result, the amount of the free phosphoric acid was less than 0.01% by mass with respect to the mass of the zinc flake in terms of a phosphorus element.

### (Evaluation of the stability of the zinc-based composite particle in an aqueous medium)

After 22.5 g of the obtained composition containing the zinc-based composite particle was dispersed in 90 g of butyl cellosolve, 90 g of deionized water was added thereto and stirred. A 10% by mass dimethylethanolamine aqueous solution was further added thereto to adjust the pH to 10.5. Thus, a sample was prepared. The prepared sample was allowed to stand at 40°C for 7 days, and generated gas was collected to measure its volume. As a result, the amount of gas generation was 0 mL.

### <Comparative example S-1>

In the same manner as in Example S-1, except that the orthophosphoric acid was added in an amount of 6.0 g, 1392 g of a composition containing a zinc-based composite particle (solid content: 1058 g) was obtained. The phosphorus element content of this composition was 0.19 parts by mass per 100 parts by mass of the zinc flake (calculated from the amount of the orthophosphoric acid added).

### (Measurement of the amount of free phosphoric acid)

The amount of free phosphoric acid in the obtained composition containing the zinc-based composite particle was measured using an ICP emission spectrometer ("Thermo Fischer ICP-OES iCAP6000" manufactured by Thermo Fisher Scientific K.K.). As a result, the amount of the free phosphoric acid was less than 0.01% by mass with respect to the mass of the zinc flake in terms of a phosphorus element.

### (Evaluation of the stability of the zinc-based composite particle in an aqueous medium)

After 22.5 g of the obtained composition containing the zinc-based composite particle was dispersed in 90 g of butyl cellosolve, 90 g of deionized water was added thereto and stirred. A 10% by mass dimethylethanolamine aqueous solution was further added thereto to adjust the pH to 10.5. Thus, a sample was prepared. The prepared sample was allowed to stand at 40°C for 7 days, and generated gas was collected to measure its volume. As a result, the amount of gas generation was 14 mL.

### <Example 1>

### (Production of a 0.3% by mass phosphoric acid treated zinc flake)

One hundred parts by mass of zinc flake ("Zinc flake MA-ZA-F" manufactured by MITSUI MINING & SMELTING CO.,LTD.) was charged in a mixer, and 1 part by mass of laurylamine and 4 parts by mass of a nonionic surfactant ("EMULGEN 105" manufactured by Kao Corporation) were charged therein. Then, a solution in which 0.3 parts by mass of the orthophosphoric acid and 1 part by mass of deionized water were mixed with 30 parts by mass of propylene glycol monomethyl ether was charged therein. The mixture was kneaded at 25°C for 30 minutes to obtain a paste of a 0.3% by mass phosphoric acid treated zinc flake (solid content: about 73% by mass).

### (Evaluation of the stability of the 0.3% by mass phosphoric acid treated zinc flake in water)

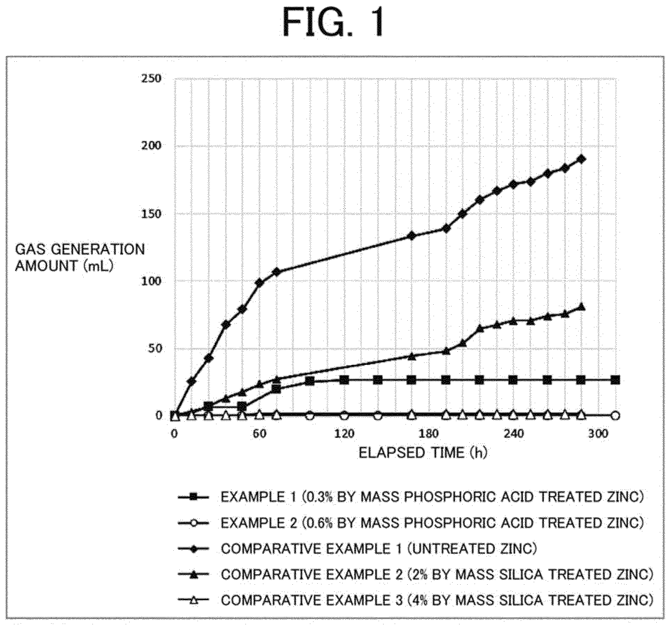

Two grams of a surfactant ("EMULGEN 108" manufactured by Kao Corporation) was added to 20 g of the prepared paste of the 0.3% by mass phosphoric acid treated zinc flake (in terms of solid content). This was added to 200 g of deionized water. The mixture was mixed for 5 minutes. Then, 200 g of the prepared dispersion was placed in a gas wash bottle and kept at about 20°C while the amount of gas generation was measured over time by a water displacement method. FIG. 1 illustrates the results. The amount of gas generation is considered to be the amount of hydrogen generated by the reaction of zinc with water, and an increase in the amount of gas generation is considered to indicate the decomposition of the phosphoric acid treated zinc flake, i.e., a rust preventive pigment, in water.

In the case of the 0.3% by mass phosphoric acid treated zinc flake, the amount of gas generation was not more than 10 mL after 48 hours, and the amount of gas generation was not more than 30 mL after 312 hours.

### (Production of a coating composition using the 0.3% by mass phosphoric acid treated zinc flake)

The prepared 0.3% by mass phosphoric acid treated zinc flake and the components below were uniformly mixed using a high-speed stirrer (HOMOGENIZING DISPER Model 2.5 manufactured by PRIMIX Corporation) to prepare a coating composition.
0.3% by mass phosphoric acid treated zinc flake: 20% by mass (in terms of solid content)
Aluminum flake ("WXM5660" manufactured by Toyo Aluminium K.K.): 10% by mass
Silane coupling agent ("KBM403" manufactured by Shin-Etsu Chemical Co., Ltd.): 8% by mass
Surfactant ("EMULGEN 108" manufactured by Kao Corporation): 2% by mass
Thickener ("CELLOSIZE (trademark) QP-4400H" manufactured by Dow Inc.): 0.1% by mass
Deionized water: (the rest)

### (Evaluation of the stability of the coating composition using the 0.3% by mass phosphoric acid treated zinc flake)

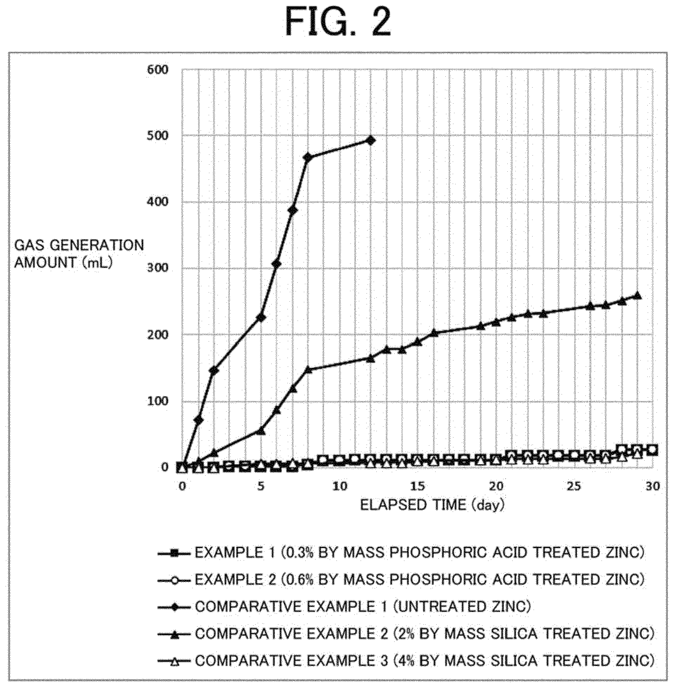

Five hundred grams of the prepared coating composition using the 0.3% by mass phosphoric acid treated zinc flake was placed in a gas wash bottle and kept at about 20°C while the amount of gas generation was measured over time by the water displacement method. FIG. 2 illustrates the results. The amount of gas generation is considered to be the amount of hydrogen generated by the reaction of zinc with water, and an increase in the amount of gas generation is considered to indicate the decomposition of the phosphoric acid treated zinc flake, i.e., a rust preventive pigment.

In the case of the coating composition using the 0.3% by mass phosphoric acid treated zinc flake, the amount of gas generation was not more than 2 mL after 7 days, and the amount of gas generation was not more than 30 mL after 30 days.

### (Evaluation of the rust prevention performance of the coating composition using the 0.3% by mass phosphoric acid treated zinc flake)

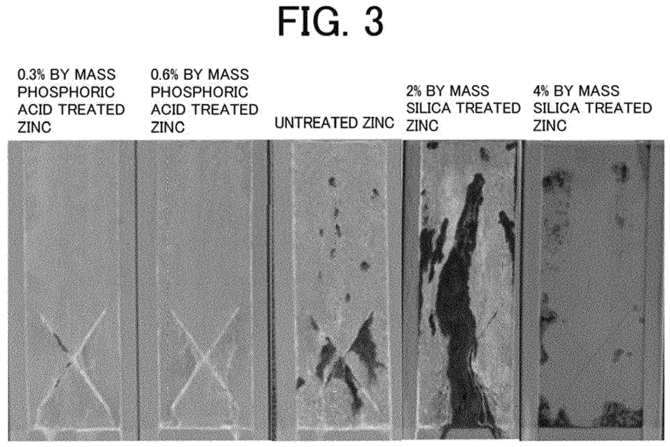

The prepared coating composition using the 0.3% by mass phosphoric acid treated zinc flake was applied on an iron plate with a bar coater in such a manner that the thickness of a dry film thereof would be about 8 µm, and heated at 250°C for 10 minutes to form a coating film. Then, the iron plate on which the coating film of the coating composition using the 0.3% by mass phosphoric acid treated zinc flake was formed was subjected to a salt spray test in accordance with JIS Z-2371 to evaluate the rust prevention performance. The photograph of the iron plate after 500 hours from the start of the salt spray test is shown in FIG. 3. The first photograph from the left in FIG. 3 is the photograph of the coating film of the coating composition using the 0.3% by mass phosphoric acid treated zinc flake.

Almost no formation of red rust was confirmed on the iron plate on which the coating film of the coating composition using the 0.3% by mass phosphoric acid treated zinc flake was formed after 500 hours. Formation of red rust was slightly confirmed only in an X-shaped cut which was made after the formation of the coating film. Deposition of zinc-derived white rust due to sacrificial corrosion of zinc was confirmed in the X-shaped cut which was made after the formation of the coating film. The deposition of zinc-derived white rust indicated that the rust prevention effect by zinc was obtained.

### <Example 2>

### (Production of a 0.6% by mass phosphoric acid treated zinc flake)

One hundred parts by mass of zinc flake ("Zinc flake MA-ZA-F" manufactured by MITSUI MINING & SMELTING CO.,LTD.) was charged in a mixer, and 1 part by mass of laurylamine and 4 parts by mass of a nonionic surfactant ("EMULGEN 105" manufactured by Kao Corporation) were charged therein. Then, a solution in which 0.6 parts by mass of the orthophosphoric acid and 1 part by mass of deionized water were mixed with 30 parts by mass of propylene glycol monomethyl ether was charged therein. The mixture was kneaded at 25°C for 30 minutes to obtain a paste of a 0.6% by mass phosphoric acid treated zinc flake (solid content: about 73% by mass).

### (Evaluation of the stability of the 0.6% by mass phosphoric acid treated zinc flake in water)

A dispersion was prepared in the same manner as in Example 1, except that the prepared 0.6% by mass phosphoric acid treated zinc flake was used in place of the 0.3% by mass phosphoric acid treated zinc flake. The amount of gas generation at about 20°C of the dispersion was measured over time. FIG. 1 illustrates the results.

In the case of the 0.6% by mass phosphoric acid treated zinc flake, the amount of gas generation was 0 mL after 300 hours.

### (Production of a coating composition using the 0.6% by mass phosphoric acid treated zinc flake)

A coating composition was prepared in the same manner as in Example 1, except that the prepared 0.6% by mass phosphoric acid treated zinc flake was used in place of the 0.3% by mass phosphoric acid treated zinc flake.

### (Evaluation of the stability of the coating composition using the 0.6% by mass phosphoric acid treated zinc flake)

The amount of gas generation at about 20°C of the prepared coating composition using the 0.6% by mass phosphoric acid treated zinc flake was measured over time in the same manner as in Example 1. FIG. 2 illustrates the results.

In the case of the coating composition using the 0.6% by mass phosphoric acid treated zinc flake, the amount of gas generation was not more than 3 mL after 7 days, and the amount of gas generation was not more than 30 mL after 30 days.

### (Evaluation of the rust prevention performance of the coating composition using the 0.6% by mass phosphoric acid treated zinc flake)

A coating film of the prepared coating composition using the 0.6% by mass phosphoric acid treated zinc flake was formed on an iron plate in the same manner as in Example 1, and the coating film was subjected to a salt spray test in accordance with JIS Z-2371 to evaluate the rust prevention performance. The photograph of the iron plate after 500 hours from the start of the salt spray test is shown in FIG. 3. The second photograph from the left in FIG. 3 is the photograph of the coating film of the coating composition using the 0.6% by mass phosphoric acid treated zinc flake.

Formation of red rust was not confirmed on the iron plate on which the coating film of the coating composition using the 0.6% by mass phosphoric acid treated zinc flake was formed after 500 hours. Deposition of zinc-derived white rust due to sacrificial corrosion of zinc was confirmed in an X-shaped cut which was made after the formation of the coating film.

### (Evaluation of the adhesion of the coating composition using the 0.6% by mass phosphoric acid treated zinc flake)

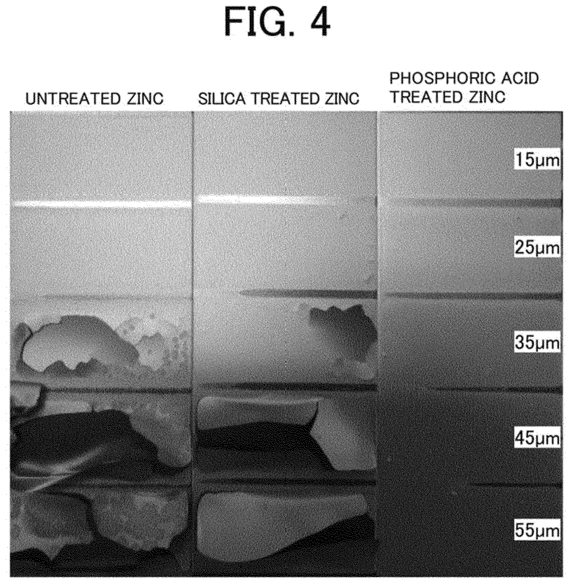

The prepared coating composition using the 0.6% by mass phosphoric acid treated zinc flake was applied on iron plates with a bar coater in such a manner that the thickness of dry films thereof would be about 15 µm, about 25 µm, about 35 µm, about 45 µm or about 55 µm, and heated at 250°C for 10 minutes to form coating films. The photographs of the formed coating films having such different thicknesses are shown in FIG. 4. The photographs of the coating films of the coating composition using the 0.6% by mass phosphoric acid treated zinc flake are the photographs on the right side in FIG. 4, which show the coating films having a dry film thickness of about 15 µm, about 25 µm, about 35 µm, about 45 µm or about 55 µm from the top.

In the case of the coating composition using the 0.6% by mass phosphoric acid treated zinc flake, any of the coating films having the different thicknesses did not peel off, and good film forming ability was obtained.

### <Comparative example 1>

### (Evaluation of the stability of untreated zinc flake in water)

A dispersion was prepared in the same manner as in Example 1, except that an untreated zinc flake having been subjected to no surface treatment ("Zinc flake MA-ZA-F" manufactured by MITSUI MINING & SMELTING CO.,LTD.) was used in place of the 0.3% by mass phosphoric acid treated zinc flake. The amount of gas generation at about 20°C of the dispersion was measured over time. FIG. 1 illustrates the results.

In the case of the untreated zinc flake having been subjected to no surface treatment, the amount of gas generation was not less than 40 mL after 24 hours, and the amount of gas generation was not less than 150 mL after 204 hours.

### (Production of a coating composition using the untreated zinc flake)

A coating composition was prepared in the same manner as in Example 1, except that the untreated zinc flake was used in place of the 0.3% by mass phosphoric acid treated zinc flake.

### (Evaluation of the stability of the coating composition using the untreated zinc flake)

The amount of gas generation at about 20°C of the prepared coating composition using the untreated zinc flake was measured over time in the same manner as in Example 1. FIG. 2 illustrates the results.

In the case of the coating composition using the untreated zinc flake, the amount of gas generation was not less than 70 mL after one day, and the amount of gas generation was not less than 300 mL after 6 days.

### (Evaluation of the rust prevention performance of the coating composition using the untreated zinc flake)

A coating film of the prepared coating composition using the untreated zinc flake was formed on an iron plate in the same manner as in Example 1, and the coating film was subjected to a salt spray test in accordance with JIS Z-2371 to evaluate the rust prevention performance. The photograph of the iron plate after 500 hours from the start of the salt spray test is shown in FIG. 3. The third photograph from the left in FIG. 3 is the photograph of the coating film of the coating composition using the untreated zinc flake.

Formation of red rust was confirmed on the iron plate on which the coating film of the coating composition using the untreated zinc flake was formed after 500 hours. In addition, zinc-derived white rust was confirmed not only in an X-shaped cut which was made after the formation of the coating film but also on the entire surface of the iron plate.

### (Evaluation of the stability of the coating composition using the untreated zinc flake)

The prepared coating composition using the untreated zinc flake was applied on iron plates as in Example 2 in such a manner that the thickness of dry films thereof would be about 15 µm, about 25 µm, about 35 µm, about 45 µm or about 55 µm, and heated at 250°C for 10 minutes to form coating films. The photographs of the formed coating films having such different thicknesses are shown in FIG. 4. The photographs of the coating films of the coating composition using the untreated zinc flake are the photographs on the left side in FIG. 4, which show the coating films having a dry film thickness of about 15 µm, about 25 µm, about 35 µm, about 45 µm or about 55 µm from the top.

In the case of the coating composition using the untreated zinc flake, the coating films peeled off from the iron plates when the dry film had a thickness of about 35 µm or more.

### <Comparative example 2>

### (Production of a 2% by mass silica treated zinc flake)

Ten parts by mass of zinc flake ("Zinc flake MA-ZA-F" manufactured by MITSUI MINING & SMELTING CO.,LTD.) was charged in a mixer. Then, 65 parts by mass of ethanol, 20 parts by mass of deionized water, and 2 parts by mass of a 25% by mass aqueous ammonia solution were added thereto while kneading. The mixture was kneaded at about 25°C for 30 minutes. Thereafter, 2 parts by mass of tetraethoxysilane ("Ethyl Silicate 28" manufactured by COLCOAT CO., LTD.) was added thereto, and the mixture was kneaded at 25°C for 2 hours. Subsequently, it was heated to 80°C while being kneaded, and dried until the water content thereof reached 1% by mass. Thus, 2% by mass silica treated zinc flake (solid content: about 99% by mass) was obtained.

### (Evaluation of the stability of the 2% by mass silica treated zinc flake in water)

A dispersion was prepared in the same manner as in Example 1, except that the prepared 2% by mass silica treated zinc flake was used in place of the 0.3% by mass phosphoric acid treated zinc flake. The amount of gas generation at about 20°C of the dispersion was measured over time. FIG. 1 illustrates the results.

In the case of the 2% by mass silica treated zinc flake, the amount of gas generation was not less than 7 mL after 24 hours, and the amount of gas generation was not less than 70 mL after 240 hours.

### (Production of a coating composition using the 2% by mass silica treated zinc flake)

A coating composition was prepared in the same manner as in Example 1, except that the prepared 2% by mass silica treated zinc flake was used in place of the 0.3% by mass phosphoric acid treated zinc flake.

### (Evaluation of the stability of the coating composition using the 2% by mass silica treated zinc flake)

The amount of gas generation at about 20°C of the prepared coating composition using the 2% by mass silica treated zinc flake was measured over time in the same manner as in Example 1. FIG. 2 illustrates the results.

In the case of the coating composition using the 2% by mass silica treated zinc flake, the amount of gas generation was not less than 9 mL after one day, and the amount of gas generation was not less than 255 mL after 30 days.

### (Evaluation of the rust prevention performance of the coating composition using the 2% by mass silica treated zinc flake)

A coating film of the prepared coating composition using the 2% by mass silica treated zinc flake was formed on an iron plate in the same manner as in Example 1, and the coating film was subjected to a salt spray test in accordance with JIS Z-2371 to evaluate the rust prevention performance. The photograph of the iron plate after 500 hours from the start of the salt spray test is shown in FIG. 3. The fourth photograph from the left in FIG. 3 is the photograph of the coating film of the coating composition using the 2% by mass silica treated zinc flake.

Formation of red rust was confirmed on the iron plate on which the coating film of the coating composition using the 2% by mass silica treated zinc flake was formed after 500 hours. In addition, zinc-derived white rust was confirmed not only in an X-shaped cut which was made after the formation of the coating film but also on the entire surface of the iron plate.

### <Comparative example 3>

### (Production of a 4% by mass silica treated zinc flake)

Ten parts by mass of zinc flake ("Zinc flake MA-ZA-F" manufactured by MITSUI MINING & SMELTING CO.,LTD.) was charged in a mixer. Then, 65 parts by mass of ethanol, 20 parts by mass of deionized water, and 2 parts by mass of a 25% by mass aqueous ammonia solution were added thereto while kneading. The mixture was kneaded at about 25°C for 30 minutes. Thereafter, 4 parts by mass of tetraethoxysilane ("Ethyl Silicate 28" manufactured by COLCOAT CO., LTD.) was added thereto, and the mixture was kneaded at 25°C for 2 hours. Subsequently, it was heated to 80°C while being kneaded, and dried until the water content thereof reached 1% by mass. Thus, 4% by mass silica treated zinc flake (solid content: about 99% by mass) was obtained.

### (Evaluation of the stability of the 4% by mass silica treated zinc flake in water)

A dispersion was prepared in the same manner as in Example 1, except that the prepared 4% by mass silica treated zinc flake was used in place of the 0.3% by mass phosphoric acid treated zinc flake. The amount of gas generation at about 20°C of the dispersion was measured over time. FIG. 1 illustrates the results.

In the case of the 4% by mass silica treated zinc flake, the amount of gas generation was not more than 1 mL after 48 hours, and the amount of gas generation was not more than 2 mL after 280 hours.

### (Production of a coating composition using the 4% by mass silica treated zinc flake)

A coating composition was prepared in the same manner as in Example 1, except that the prepared 4% by mass silica treated zinc flake was used in place of the 0.3% by mass phosphoric acid treated zinc flake.

### (Evaluation of the stability of the coating composition using the 4% by mass silica treated zinc flake)

The amount of gas generation at about 20°C of the prepared coating composition using the 4% by mass silica treated zinc flake was measured over time in the same manner as in Example 1. FIG. 2 illustrates the results.

In the case of the coating composition using the 4% by mass silica treated zinc flake, the amount of gas generation was 0 mL after 2 days, and the amount of gas generation was not more than 20 mL after 28 days.

### (Evaluation of the rust prevention performance of the coating composition using the 4% by mass silica treated zinc flake)

A coating film of the prepared coating composition using the 4% by mass silica treated zinc flake was formed on an iron plate in the same manner as in Example 1, and the coating film was subjected to a salt spray test in accordance with JIS Z-2371 to evaluate the rust prevention performance. The photograph of the iron plate after 500 hours from the start of the salt spray test is shown in FIG. 3. The fifth photograph from the left (the first photograph from the right) in FIG. 3 is the photograph of the coating film of the coating composition using the 4% by mass silica treated zinc flake.

Formation of red rust was confirmed on the entire surface of the iron plate on which the coating film of the coating composition using the 4% by mass silica treated zinc flake was formed after 500 hours. However, zinc-derived white rust was not confirmed. This indicated that the rust prevention effect by zinc was not obtained.

### (Evaluation of the adhesion of the coating composition using the 4% by mass silica treated zinc flake)

The prepared coating composition using the 4% by mass silica treated zinc flake was applied on iron plates as in Example 2 in such a manner that the thickness of dry films thereof would be about 15 µm, about 25 µm, about 35 µm, about 45 µm or about 55 µm, and heated at 250°C for 10 minutes to form coating films. The photographs of the formed coating films having such different thicknesses are shown in FIG. 4. The photographs of the coating films of the coating composition using the 4% by mass silica treated zinc flake are the photographs at the middle in FIG. 4, which show the coating films having a dry film thickness of about 15 µm, about 25 µm, about 35 µm, about 45 µm or about 55 µm from the top.

In the case of the coating composition using the 4% by mass silica treated zinc flake, the coating films peeled off from the iron plates when the dry film had a thickness of about 35 µm or more.

As can be seen from FIGS. 1 and 2, the 0.3% by mass phosphoric acid treated zinc flake and the 0.6% by mass phosphoric acid treated zinc flake had sufficient stability in both water and the coating composition thereof. On the other hand, although the 4% by mass silica treated zinc flake had sufficient stability in both water and the coating composition thereof, the 2% by mass silica treated zinc flake had insufficient stability in both water and the coating composition thereof. The untreated zinc flake having been subjected to no surface treatment had very low stability in both water and the coating composition thereof.

Further, as can be seen from FIG. 3, the coating compositions using the 0.3% by mass phosphoric acid treated zinc flake and the 0.6% by mass phosphoric acid treated zinc flake had excellent rust prevention performance. On the other hand, the coating compositions using the 2% by mass silica treated zinc flake and the 4% by mass silica treated zinc flake as well as the coating composition using the untreated zinc flake having been subjected to no surface treatment had insufficient rust prevention performance. Particularly, although the coating composition using the 4% by mass silica treated zinc flake had high stability in both water and the coating composition thereof, it had poor rust prevention performance.

Furthermore, as can be seen from FIG. 4, the coating composition using the phosphoric acid treated zinc flake was also excellent in the adhesion of the resulting coating films, and no coating film peeled off from the articles to be coated regardless of the thickness of the coating films, and good film forming ability was obtained. On the other hand, when it comes to the coating composition using the silica treated zinc flake and the coating composition using the untreated zinc flake having been subjected to no surface treatment, the thin coating films did not peel off from the articles to be coated. However, in the cases of the thick coating films having a dry film thickness of about 35 µm or more, the coating films peeled off from the articles to be coated, and good film forming ability was not obtained. Incidentally, the thicker the coating film is, the more it shrinks due to the heat at the time of film formation, which leads to the tendency of the coating films to peel off from the articles to be coated.

### <Example 3>

### (Production of a coating composition using the 0.3% by mass phosphoric acid treated zinc flake and an organic-based binder resin)

The 0.3% by mass phosphoric acid treated zinc flake prepared in the same manner as Example 1 and the components below were uniformly mixed using a high-speed stirrer (HOMOGENIZING DISPER Model 2.5 manufactured by PRIMIX Corporation) to prepare a coating composition. Incidentally, the epoxy resin serves as an organic-based binder resin.
0.3% by mass phosphoric acid treated zinc flake: 5% by mass (in terms of solid content)
Aluminum flake ("WXM5660" manufactured by Toyo Aluminium K.K.): 1% by mass
Epoxy resin ("MODEPICS 301" manufactured by ARAKAWA CHEMICAL INDUSTRIES, LTD.): 30% by mass
Surfactant ("EMULGEN 108" manufactured by Kao Corporation): 2% by mass
Lubricant ("Polygen WE6" manufactured by BASF Japan Ltd.): 10% by mass
Rust preventive pigment ("SYLOMASK" manufactured by FUJI SILYSIA CHEMICAL LTD.): 3% by mass
Black pigment ("SA Black 3111" manufactured by Mikuni-Color Ltd.): 5% by mass
Thickener ("KELZAN AR" manufactured by Sansho Co., Ltd.): 0.5% by mass
Deionized water: (the rest)

### (Evaluation of the rust prevention performance of the coating composition using the 0.3% by mass phosphoric acid treated zinc flake and the organic-based binder resin)

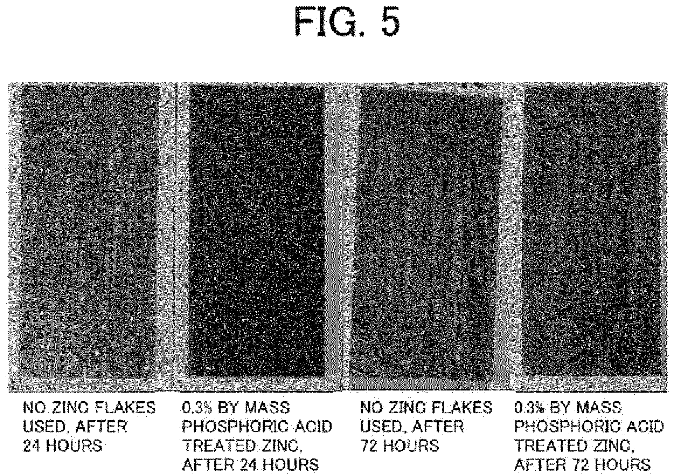

The prepared coating composition using the 0.3% by mass phosphoric acid treated zinc flake and the organic-based binder resin was applied on an iron plate with a bar coater in such a manner that the thickness of a dry film thereof would be about 4 µm, and heated at 100°C for 20 minutes to form a coating film. Then, the iron plate on which the coating film of the coating composition using the 0.3% by mass phosphoric acid treated zinc flake and the organic-based binder resin was formed was subjected to a salt spray test in accordance with JIS Z-2371 to evaluate the rust prevention performance. The photographs of the iron plate after 24 hours and 72 hours from the start of the salt spray test are shown in FIG. 5. The second photograph from the left in FIG. 5 is the photograph of the coating film of the coating composition using the 0.3% by mass phosphoric acid treated zinc flake and the organic-based binder resin after 24 hours from the start of the salt spray test. The fourth photograph from the left in FIG. 5 is the photograph of the coating film of the coating composition using the 0.3% by mass phosphoric acid treated zinc flake and the organic-based binder resin after 72 hours from the start of the salt spray test.

Formation of red rust was slightly confirmed on the iron plate on which the coating film of the coating composition using the 0.3% by mass phosphoric acid treated zinc flake and the organic-based binder resin was formed after 24 hours. Deposition of zinc-derived white rust due to sacrificial corrosion of zinc was confirmed in an X-shaped cut which was made after the formation of the coating film. Further, the formation of red rust was sufficiently prevented on the iron plate on which the coating film of the coating composition using the 0.3% by mass phosphoric acid treated zinc flake and the organic-based binder resin was formed even after 72 hours.

### <Comparative example 4>

### (Production of a coating composition using an organic-based binder resin and no 0.3% by mass phosphoric acid treated zinc flake)

A coating composition was prepared in the same manner as in Example 3, except that the 0.3% by mass phosphoric acid treated zinc flake was not used.

### (Evaluation of the rust prevention performance of the coating composition using the organic-based binder resin and no 0.3% by mass phosphoric acid treated zinc flake)

A coating film of the prepared coating composition using the organic-based binder resin and no 0.3% by mass phosphoric acid treated zinc flake was formed on an iron plate in the same manner as in Example 3, and the coating film was subjected to a salt spray test in accordance with JIS Z-2371 to evaluate the rust prevention performance. The photographs of the iron plate after 24 hours and 72 hours from the start of the salt spray test are shown in FIG. 5. The first photograph from the left in FIG. 5 is the photograph of the coating film of the coating composition using the organic-based binder resin and no 0.3% by mass phosphoric acid treated zinc flake after 24 hours from the start of the salt spray test. The third photograph from the left in FIG. 5 is the photograph of the coating film of the coating composition using no 0.3% by mass phosphoric acid treated zinc flake after 72 hours from the start of the salt spray test.

Formation of red rust was confirmed on the entire surface of the iron plate on which the coating film of the coating composition using no phosphoric acid treated zinc flake was formed after 24 hours.

### <Example 4>

### (Production of a 1.5% by mass phosphoric acid treated zinc powder)

After 1.5 parts by mass of the orthophosphoric acid, 1.5 parts by mass of deionized water, 5 parts by mass of a nonionic-based surfactant ("NONION ID-206" manufactured by NOF CORPORATION), 30 parts by mass of triethylene glycol, and 70 parts by mass of ethylene glycol monobutyl ether were charged into a reaction vessel and mixed together, 100 parts by mass of a zinc powder ("ZINC POWDER #1" manufactured by SAKAI CHEMICAL INDUSTRY CO., LTD.) was charged. The mixture was stirred and kneaded at 40°C for 24 hours. The resultant slurry was filtered to separate a phosphoric acid treated zinc powder. The separated powder was washed with acetone and dried at 60°C for 3 hours to obtain a 1.5% by mass phosphoric acid treated zinc powder.

### (Evaluation of the stability of the 1.5% by mass phosphoric acid treated zinc powder in water)

A dispersion was prepared in the same manner as in Example 1, except that the prepared 1.5% by mass phosphoric acid treated zinc powder was used in place of the 0.3% by mass phosphoric acid treated zinc flake. The amount of gas generation at about 20°C of the dispersion was measured over time.

In the case of the 1.5% by mass phosphoric acid treated zinc powder, the amount of gas generation was not more than 30 mL after 300 hours.

### <Comparative example 5>

### (Evaluation of the stability of an untreated zinc powder in water)

A dispersion was prepared in the same manner as in Example 1, except that an untreated zinc powder ("ZINC POWDER #1" manufactured by SAKAI CHEMICAL INDUSTRY CO., LTD.) having been subjected to no surface treatment was used in place of the 0.3% by mass phosphoric acid treated zinc flake. The amount of gas generation at about 20°C of the dispersion was measured over time.

In the case of the untreated zinc powder having been subjected to no surface treatment, the amount of gas generation was not less than 10 mL after 24 hours, and the amount of gas generation was 90 mL after 204 hours.

### <Example 5>

### (Production of a coating composition using the 0.3% by mass phosphoric acid treated zinc flake and the 1.5% by mass phosphoric acid treated zinc powder)

A coating composition was prepared in the same manner as in Example 1, except that 12% by mass of the 0.3% by mass phosphoric acid treated zinc flake (prepared as in Example 1) and 8% by mass of the 1.5% by mass phosphoric acid treated zinc powder (prepared as in Example 4) were used in place of 20% by mass of the 0.3% by mass phosphoric acid treated zinc flake.

### (Evaluation of the rust prevention performance of the coating composition using the 0.3% by mass phosphoric acid treated zinc flake and the 1.5% by mass phosphoric acid treated zinc powder)

A coating film of the prepared coating composition using the 0.3% by mass phosphoric acid treated zinc flake and the 1.5% by mass phosphoric acid treated zinc powder was formed on an iron plate in the same manner as in Example 1, and the coating film was subjected to a salt spray test in accordance with JIS Z-2371 to evaluate the rust prevention performance.

Formation of red rust was not confirmed on the iron plate on which the coating film of the coating composition using the 0.3% by mass phosphoric acid treated zinc flake and the 1.5% by mass phosphoric acid treated zinc powder was formed after 500 hours. Deposition of zinc-derived white rust due to sacrificial corrosion of zinc was confirmed in an X-shaped cut which was made after the formation of the coating film.

### <Comparative example 6>

### (Production of a coating composition using an untreated zinc flake and an untreated zinc powder)

A coating composition was prepared in the same manner as in Example 1, except that 12% by mass of an untreated zinc flake ("Zinc flake MA-ZA-F" manufactured by MITSUI MINING & SMELTING CO.,LTD.) and 8% by mass of an untreated zinc powder ("ZINC POWDER #1" manufactured by SAKAI CHEMICAL INDUSTRY CO., LTD.) were used in place of 20% by mass of the 0.3% by mass phosphoric acid treated zinc flake.

### (Evaluation of the rust prevention performance of the coating composition using the untreated zinc flake and the untreated zinc powder)

A coating film of the prepared coating composition using the untreated zinc flake and the untreated zinc powder was formed on an iron plate in the same manner as in Example 1, and the coating film was subjected to a salt spray test in accordance with JIS Z-2371 to evaluate the rust prevention performance.

Formation of red rust was confirmed on the iron plate on which the coating film of the coating composition using the untreated zinc flake and the untreated zinc powder was formed after 500 hours. In addition, zinc-derived white rust was confirmed not only in an X-shaped cut which was made after the formation of the coating film but also on the entire surface of the iron plate.

The present application is based on the Japanese Patent Application (Japanese Patent Application No. 2020-200323) filed on Dec. 2, 2020, with the Japan Patent Office, the contents of which are incorporated herein by reference.

### [Industrial Applicability]

According to the present disclosure, it is possible to provide a rust preventive pigment that can achieve both the high stability thereof in water or in an aqueous medium and excellent rust prevention performance and adhesion of a resulting rust preventive film. In addition, according to the present disclosure, it is also possible to provide a rust preventive coating composition, in particular, an aqueous coating composition containing water as a solvent, that can provide excellent stability of a rust preventive pigment and a rust preventive film with excellent rust prevention performance and adhesion.

Furthermore, according to the present disclosure, it is also possible to provide a zinc-based composite particle having high stability in water or in an aqueous medium, and a composition containing the zinc-based composite particle. The zinc-based composite particle can be particularly suitably used as a rust preventive pigment for an aqueous rust preventive coating composition.

## Claims

1. A rust preventive coating composition, comprising:
a rust preventive pigment comprising a zinc or zinc alloy particle having a surface that is at least partially treated with a phosphoric acid.

2. A rust preventive coating composition, comprising:
a rust preventive pigment comprising a zinc or zinc alloy particle having a film on at least part of a surface thereof, wherein
the film contains at least one selected from an inorganic phosphoric acid and an inorganic phosphate.

3. The rust preventive coating composition according to claim 1 or 2, wherein the zinc or zinc alloy particle has a substantially spherical shape or a flake-like shape.

4. The rust preventive coating composition according to any one of claims 1 to 3, wherein the phosphoric acid is an orthophosphoric acid.

5. The rust preventive coating composition according to any one of claims 1 to 4, further comprising water.

6. The rust preventive coating composition according to any one of claims 1 to 5, further comprising a binder.

7. The rust preventive coating composition according to claim 6, wherein the binder contains at least one selected from a silane-based binder and an organic-based binder resin.

8. The rust preventive coating composition according to any one of claims 1 to 7, further comprising a hydrophilic organic solvent in addition to water.

9. The rust preventive coating composition according to any one of claims 1 to 8, further comprising an aluminum or aluminum alloy particle, as another metal pigment.

10. A rust preventive film that is obtained by drying or heat-treating the rust preventive coating composition according to any one of claims 1 to 9.

11. An article that has a rust preventive film on a surface thereof, wherein the rust preventive film is obtained by drying or heat-treating the rust preventive coating composition according to any one of claims 1 to 9.

12. A zinc-based composite particle, comprising:
a flake-like zinc-containing particle; and
a film that is on a surface of the flake-like zinc-containing particle and contains at least one selected from an inorganic phosphoric acid and an inorganic phosphate, wherein
the film contains 0.05 to 2.5 parts by mass of a phosphorus element per 100 parts by mass of the flake-like zinc-containing particle.

13. The zinc-based composite particle according to claim 12, wherein the inorganic phosphoric acid includes at least one selected from an orthophosphoric acid, a pyrophosphoric acid, a triphosphoric acid, a tetraphosphoric acid, and a phosphorous acid.

14. A composition containing a zinc-based composite particle, comprising:
the zinc-based composite particle according to claim 12 or 13; and
an amine compound.

15. The composition containing a zinc-based composite particle according to claim 14, wherein the amine compound is a primary amine.

16. The composition containing a zinc-based composite particle according to claim 14 or 15, further comprising a surfactant.

17. The composition containing a zinc-based composite particle according to claim 16, wherein the surfactant is a nonionic surfactant.
